# EUROPÄISCHE PATENTANMELDUNG

(11) **EP 0 882 567 A2**
(43) Veröffentlichungstag der Anmeldung: **09.12.1998**
(21) Anmeldenummer: 98102988.7
(22) Anmeldetag: 20.02.1998
(51) Int. Cl.: B29C 65/02

(54) **Querschweisseinrichtung und Verfahren zum Einstellen und Bewegen der Schweissstempel in einer Querschweisseinrichtung**

(30) Priorität: 23.05.1997 DE 19721594
(71) Anmelder: Hugo Beck GmbH & Co. KG, Verpackungs-Maschinenbau, 72581 Dettingen (DE)
(72) Erfinder: Heimann, Horst, 73230 Kirchheim/Teck (DE); Dilger, Ulrich, 73257 Köngen (DE)
(74) Vertreter: Klocke, Peter, Dipl.-Ing.

(57) **Zusammenfassung**

Querschweißeinrichtung für endlose Folienbahnen verwendende Verpackungsmaschinen bei der die beiden Motoren, die die Schweißstempel (14,16) senkrecht zur Bewegungsrichtung der Folienbahn als auch parallel zur Bewegungsrichtung der Folienbahn unabhängig voneinander bewegen, dazu benutzt werden, auch die Verstellung der Schweißstempel (14,16) aufgrund geänderter Höhe des Packguts zu bewerkstelligen. Hierzu werden gemäß einer besonderen Ausgestaltung des Verfahrens zum Einstellen und Bewegen der Schweißstempel (14,16) diese in eine Ausklinkposition gefahren, in der ein Schweißstempel (14,16) von den jeweiligen Antriebsriemen (8) gelöst und der andere verstellt wird.

## Beschreibung

Die vorliegende Erfindung betrifft eine Querschweißeinrichtung für endlose Folienbahnen verwendende Verpackungsmaschinen mit einer einen ersten und einen zweiten Schweißstempel aufweisenden Schweißeinheit, wobei die Querverschweißung im kontinuierlichen Betrieb erfolgt und die Schweißstempel sowohl mittels eines ersten Motors senkrecht zur Bewegungsrichtung der Folienbahn als auch mittels eines weiteren Motors unabhängig davon parallel zur Bewegungsrichtung der Folienbahn bewegbar sind. Die Erfindung betrifft außerdem ein Verfahren zum Einstellen und Bewegen von Schweißstempeln in einer derartigen Schweißeinrichtung.

Üblicherweise verwenden derartige Verpackungsmaschinen zu einem Halbschlauch gefaltete Folienbahnen und werden daher auch als Schlauchbeutelmaschinen bezeichnet. Bei den kontinuierlich arbeitenden Verpackungsmaschinen erfolgt der Transport der Folie kontinuierlich ohne Stillstand und die Verschweißung der das Packgut umhüllenden Folie geschieht bei bewegter Folie und bewegtem Packgut. Die Ablängung der Folie auf die den Abmessungen des Packguts entsprechende Länge erfolgt bei dieser Art von Verpackungsmaschinen mittels einer auf einer kurzen Wegstrecke mitbewegten Querschweißeinrichtung, die nach dem Abschweißen wieder zurück in ihre Ausgangsposition fährt. Aus der DE 44 25 207 A1 ist bekannt, die Bewegung der Querschweißeinrichtung parallel zur Folienbahn mittels einer Antriebseinrichtung und die Bewegung der Schweißstempel senkrecht zur Folienoberfläche mittels eines weiteren Motors unabhängig voneinander durchzuführen.

Bei einer Veränderung der Abmessungen des Packguts, insbesondere in der Höhe, muß eine Neueinstellung des Abstandes der Schweißstempel zueinander erfolgen, damit die Schlauchfolien, insbesondere bei hohem Packgut, in der Mitte der Packguthöhe geschweißt wird. Diese Einstellungen werden üblicherweise manuell mit Handrädern oder dgl. durchgeführt.

Der vorliegenden Erfindung liegt daher die Aufgabe zugrunde, eine Möglichkeit der automatischen Verstellung des Abstandes der Schweißstempel zueinander vorzuschlagen, die mittels der ohnehin vorhandenen Antriebseinrichtungen für die Querschweißeinrichtung bewerkstelligt wird. Zusätzlich soll auch die Möglichkeit, die mitbewegte Masse möglichst gering zu halten, offen gehalten werden.

Diese Aufgabe wird durch eine Querschweißeinrichtung mit den Merkmalen des Hauptanspruchs gelöst. Weitere vorteilhafte Ausgestaltungen sind den Unteransprüchen zu entnehmen. Die Aufgabe wird außerdem durch ein Verfahren mit den Merkmalen des Verfahrensanspruchs gelöst. Weitere vorteilhafte Ausgestaltungen des Verfahrens sind den diesbezüglich rückbezogenen Unteransprüchen zu entnehmen.

Bei der Querschweißeinrichtung ist die Schweißeinheit auf einem parallel zur Folienbahn bewegbaren Schlitten angeordnet und weist zwei beidseitig der Folienbahn angeordnete Schweißstempelhalter auf. In den Schweißstempelhaltern sind jeweils über Umlenkrollen Antriebsriemen angeordnet, die Schweißstempel tragen und zur Durchführung der Querverschweißung die quer zur Folienbahn angeordneten Schweißstempel senkrecht zur Oberfläche der Folienbahn bewegen. Ein Schweißstempel, vorzugsweise der dem Schlitten zugewandte, ist über jeweils eine Klemmeinrichtung in Form einer Dreirollenführung am jeweiligen Antriebsriemen gehalten, die drei im wesentlichen auf einer Linie angeordnete Rollen aufweist, wobei der Antriebsriemen die mittlere Rolle umschlingt. Die beiden äußeren Rollen sind frei drehbar, während die mittlere Rolle über Kupplungsscheiben, die gegen eine Federkraft voneinander trennbar sind, drehfest mit dem Schweißstempel verbunden ist. Die Schweißstempel sind, damit sie aufeinander zu bewegt werden können, an den gegenläufigen Strängen des Antriebsriemens befestigt. Die Dreirollenführung in der vorstehend beschriebenen Ausführungsart stellt sicher, daß auch der untere Schweißstempel ebenso wie der obere Schweißstempel fest an dem Antriebsriemen fixiert ist und dessen Bewegung mitmacht, aber auch von dem Antriebsriemen gelöst werden kann.

Dadurch, daß die mittlere Rolle Kupplungsscheiben aufweist, kann diese durch einen Stift oder gesondert angetriebene Pneumatikzylinder oder andere dem Fachmann geläufige Einrichtungen von dem Schweißstempel gelöst werden. Dadurch wird die mittlere Rolle frei drehbar, so daß der Antriebsriemen über die drei Rollen geführt werden kann, ohne daß sich der Schweißstempel mitbewegt. Auf diese Art und Weise kann der Abstand zwischen dem weiterhin an dem Antriebsriemen fixierten (oberen) und dem gelösten (unteren) Schweißstempel entsprechend der Höhe des Packguts verändert werden. Diese Änderung kann infolgedessen durch den gleichen Antrieb erfolgen, der auch die Schweißstempel aufeinander zu bewegt, was insbesondere bei der Verwendung von intelligenten Servomotoren, die mit einer entsprechenden Rechnereinheit ausgestattet sind, leicht automatisch und exakt durchgeführt werden kann. Gemäß einer bevorzugten Ausführungsform ist die mittlere Rolle auf einer Hohlachse gelagert, in die an ihrem einen Ende ein Ausdrückstift einführbar ist. Dieser Ausdrückstift kann entweder direkt mit der Schweißstempelhalterung verbunden oder entfernt an einer festen Position angeordnet sein. Im Hinblick auf eine möglichst geringe zu beschleunigende Masse bei hohen Taktgeschwindigkeiten sind die Ausdrückstifte fest an einem Tragrahmen befestigt und der Schlitten ist zum Trennen der mittleren Rollen von dem Schweißstempel bis zu diesen Ausdrückstiften verfahrbar.

Gemäß einer bevorzugten Ausführungsform der Befestigung der mittleren Rolle ist die Rolle auf ihrer dem einen Ende der Hohlachse abgewandten Seite mit einer Kupplungsscheibe versehen, die in eine zweite Kupplungsscheibe, die an einer drehfesten, gegen eine Federkraft axial auf der Stelle bewegbaren Haltescheibe angebracht ist, haftet. Die Kupplungsscheiben müssen dabei möglichst fein miteinander in Eingriff gebracht werden können, um die Palette der Verstellmöglichkeiten der Schweißstempel möglichst groß zu halten. Am günstigsten wäre eine Reibkupplung, wenn diese eine ausreichende Haltekraft gewährleistet. Vorteilhafterweise sind die Kupplungsscheiben als feinrastige Schaltkupplung ausgebildet, beispielsweise als Klauenkupplung, oder sie sind mit einer sogenannten Hirth-Verzahnung ausgerüstet.

Um weiterhin die zu verfahrende Masse des verfahrbaren Schlittens möglichst gering zu halten, ist in einer weiteren bevorzugten Ausführungsform an einem Tragrahmen, gegenüber dem der Schlitten parallel zur Folienbahn verfahrbar ist, eine in Folienlängsrichtung sich erstreckende und an dem Tragrahmen axial verdrehbar gelagerte Drehmomentwelle angeordnet. Diese ist über einen Servoantrieb, der somit ebenfalls nicht mitbewegt wird, antreibbar. Der Schlitten ist entlang dieser Drehmomentwelle bewegbar und die Drehbewegung der Drehmomentwelle wird mittels Kraftübertragungseinrichtungen auf die Antriebsriemen der Schweißeinheit übertragen. Gemäß einer bevorzugten Ausführungform wird zur Kraftübertragung zwischen der Drehmomentwelle und der Schweißeinheit auf dem Schlitten mindestens eine das Drehmoment der Welle aufnehmende (Haupt-) Antriebsscheibe und im Bereich der Schweißstempelträger zur Durchführung der Bewegung der Schweißstempel jeweils eine Schweißstempel-Antriebsscheibe verwendet, die über mindestens einen (Haupt-) Antriebsriemen miteinander verbunden sind.

Bei dem erfindungsgemäß ausgestalteten Verfahren zum Einstellen und Bewegen der Schweißstempel wird, wie bereits vorstehend im Zusammenhang mit der Querschweißeinrichtung teilweise erläutert, zum Verstellen des Abstandes der Schweißstempel zueinander ein Schweißstempel automatisch von den Antriebsriemen gelöst, anschließen die relative Lage zwischen Schweißstempel und dem Antriebsriemen entsprechend dem gewünschten Abstand zwischen dem festen Schweißstempel und dem gelösten Schweißstempel verändert und darauffolgend der gelöste Schweißstempel automatisch an dem Antriebsriemen fixiert.

Grundsätzlich ist es möglich, auch den Antriebsriemen festzuhalten und den Schweißstempel entlang des Antriebsriemens zu bewegen. Vorzugsweise wird jedoch der gelöste Schweißstempel in seiner Position gehalten, anschließend der Antriebsriemen mit dem festen Schweißstempel bis zu dem gewünschten Abstand verfahren. Dies macht keinen weiteren Antrieb für die Verstellung erforderlich.

Um auch weiterhin mit ohnehin notwendigen Antriebsmitteln für das Verstellen der Schweißstempel auskommen zu können, wird gemäß einer weiteren bevorzugten Ausführungsform zum Lösen des Schweißstempel die Schweißeinheit in eine Ausklinkposition verfahren. Dazu kann die ohnehin für die Bewegung parallel zur Bewegungsrichtung der Folienbahn erforderliche Antriebseinheit verwendet werden. Mit Erreichen der Ausklinkposition wird der Schweißstempel von dem Antriebsriemen gelöst und in seiner augenblicklichen Position gehalten und beim Wegfahren wieder an dem Antriebsriemen fixiert.

Mit der Erfindung wird somit eine Möglichkeit gegeben, die nur durch Verwendung der beiden ohnehin erforderlichen Antriebsmotoren als intelligente Servomotoren auch das automatische Verstellen der Schweißstempel bei Veränderung der Packguthöhe gewährleistet. Damit kann die Querschweißeinrichtung schnell auf sich ändernde Abmessungen eingestellt werden. Zusätzlich erlaubt die Querschweißeinrichtung durch möglichst wenig mitbewegte Massen eine hohe Taktgeschwindigkeit.

Nachfolgend wird die Erfindung anhand eines Ausführungsbeispiels in Verbindung mit den begleitenden schematischen Zeichnungen näher erläutert. Es stellen dar:
- Figur 1: eine Stirnansicht der Querschweißeinrichtung, wobei aus Vereinfachungsgründen nicht die Erfindung betreffende Abdeckungen oder Halterungen weggelassen sind,
- Figur 2: eine vergrößerte schematische Darstellung des unteren Schweißstempels mit der Fixierung an den Antriebsriemen;
- Figur 3: einen Längsschnitt durch die mittlere Rolle der Dreirollenführung;
- Figur 4: die Seitenansicht der Dreirollenführung im Schnitt;
- Figur 5: die Seitenansicht der Querschweißeinrichtung und
- Figur 6: die Draufsicht auf die Querschweißeinrichtung.

Nachfolgend wird die Erfindung anhand einer Querschweißeinrichtung erläutert, wie sie bei einer horizontalen Schlauchbeutelverpackungsmaschine Verwendung findet. Es ist selbstverständlich, daß sich das gleiche Prinzip auch auf eine vertikale Schlauchbeutelverpackungsmaschine übertragen läßt.

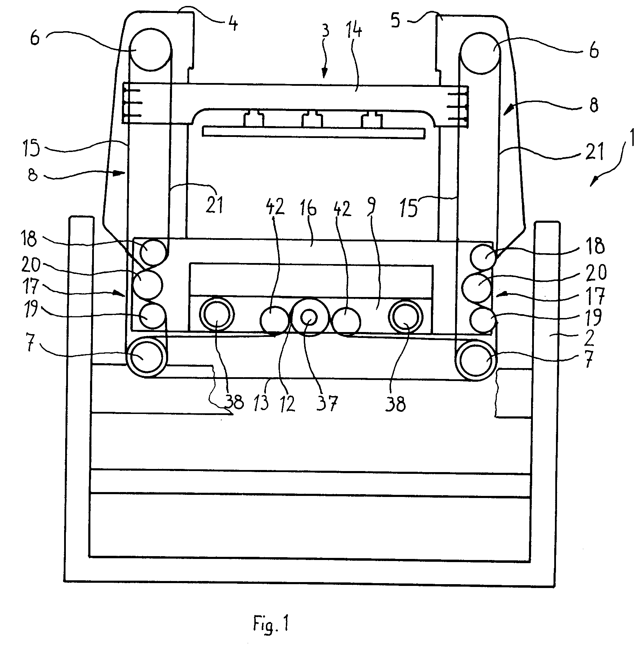

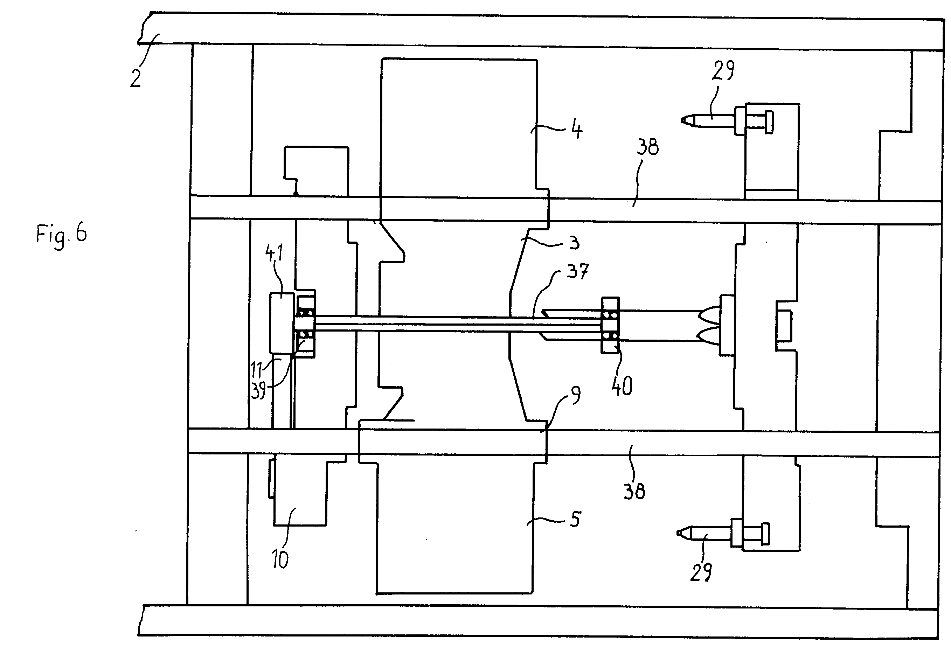

Figur 1 zeigt die Querschweißeinrichtung 1 mit einem Tragrahmen 2, an dem die Schweißeinheit 3 parallel zur Folientransportrichtung in die Zeichenebene hinein mittels eines Schlittens 9 verfahrbar ist. Die Schweißeinheit 3 weist beidseitig der senkrecht zur Zeichenebene verlaufenden Folienbahn Schweißstempelhalter 4, 5 auf, die jeweils einen über obere Rollen 6 und untere Rollen 7 geführten Antriebsriemen 8 aufweisen. Der Antriebsriemen 8 in beiden Schweißstempelhaltern 4 wird mittels einem (Haupt-) Antriebsriemen 13, der über Führungsrollen 42 über eine Antriebsscheibe 12, die ebenfalls auf dem Schlitten 9 angeordnet ist, angetrieben. Der Antrieb der Antriebsscheibe 12 erfolgt in diesem Ausführungsbeispiel, wie nachfolgend in Verbindung mit Figur 6 noch näher erläutert, über eine Drehmomentwelle 37, die direkt oder, wie dargestellt, mittels eines weiteren Antriebsriemens 11 mit auf der Drehmomentwelle angeordneter Riemenscheibe 41 von einem am Tragrahmen 2 befestigten Motor 10 angetrieben wird.

Der obere Schweißstempel 14 ist (Figur 1) an beiden Antriebsriemen 8 am linken Trum 15 befestigt. Der untere Schweißstempel 16 ist über eine Dreirollenführung 17, bestehend aus einer oberen und einer unteren losen Rolle 18, 19 und einer mittleren, mit dem unteren Schweißstempel 16 drehfest verbunden lösbaren Rolle 20 am rechten Trum 21 des Antriebsriemens 8 befestigt. Wenn der Antriebsriemen 8 in Bewegung versetzt wird, bewegen sich der untere und der obere Schweißstempel 16, bzw. 14 aufeinander zu bzw. voneinander weg.

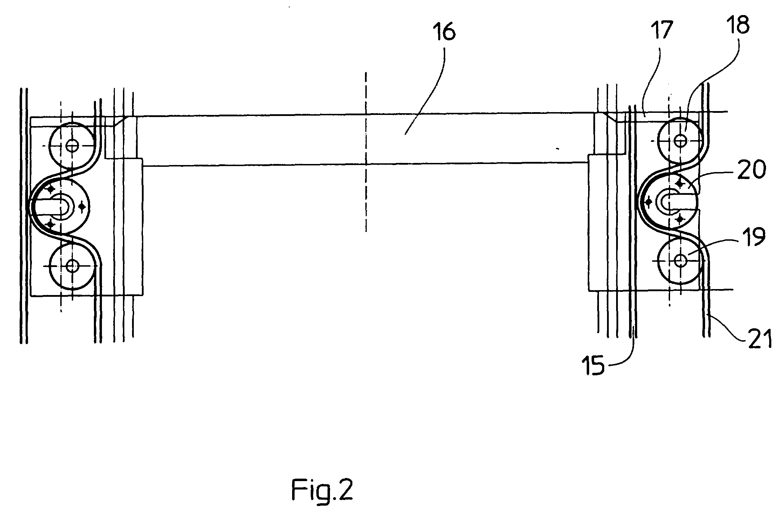

Damit der Abstand der Schweißstempel 14, 16 entsprechend der Packguthöhe variiert werden kann, ist, wie erwähnt, der untere Schweißstempel 16 von dem Antriebsriemen 8 lösbar, so daß über den Motor 10, der als intelligenter Servoantrieb ausgestaltet ist, der obere Schweißstempel 14 bei feststehendem unterem Schweißstempel 16 verfahren werden kann, um den neuen Abstand einzustellen. Dies wird nachfolgend in Verbindung mit den Figuren 2 bis 4 näher erläutert.

Figur 2 zeigt in einer vergrößerten Darstellung den unteren Schweißstempel 16 mit der Dreirollenführung 17 mit den oberen und unteren einen kleineren Durchmesser aufweisenden losen Rollen 18 bzw. 19 und der mittleren, normalerweise drehfest mit dem Schweißstempel verbundenen, jedoch lösbaren, einen größeren Durchmesser aufweisenden, als Zahnriemenscheibe ausgebildeten Rolle 20.

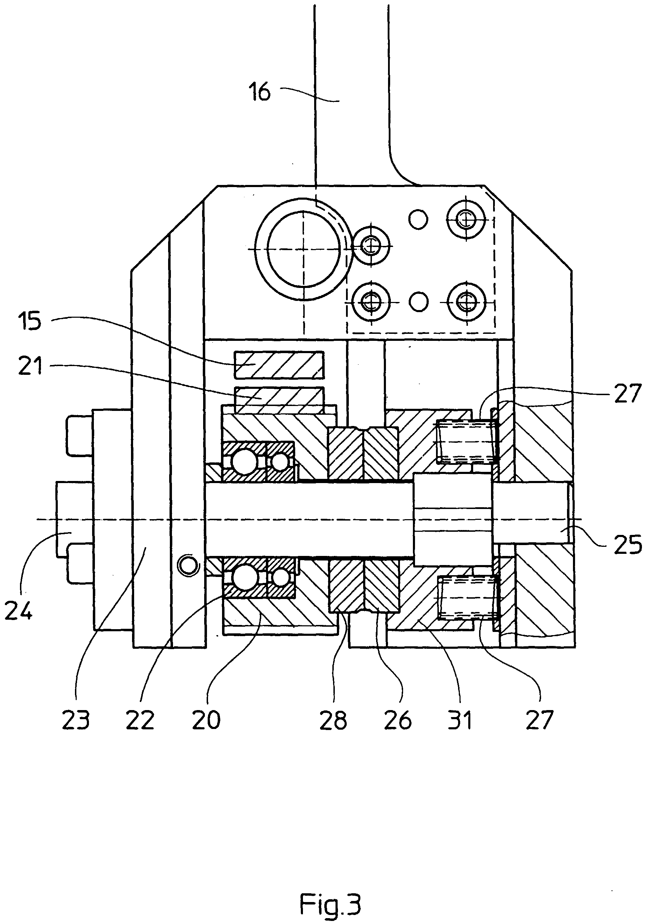

Figur 3 zeigt den Längsschnitt durch die Dreirollenführung 17 im Bereich der mittleren, als Zahnriemenscheibe ausgebildeten Rolle 20. Die mittlere Zahnriemenscheibe 20 ist mittels Kugellagern 22 auf der Achse 23 gelagert, die an ihren Enden 24 und 25 fest mit dem unteren Schweißstempel 16 verbunden ist. An das Ende 25 anschließend, befindet sich auf der Achse 23 eine in axialer Richtung verschiebbare und gegenüber der Achse 23 drehfeste Haltescheibe 31 mit einer auf der dem Ende 25 abgewandten Seite angeordneten Kupplungsscheibe 26. Hierzu weist die Achse 23 in einer dem Fachmann geläufige Art und Weise entsprechende in Längsrichtung verlaufende Nuten bzw. Federn auf, um Drehfestigkeit sicherzustellen. Die Haltescheibe 31 wird über Schraubenfedern 27, die sich an dem unteren Schweißstempel 16 abstützen, gegen eine weitere Kupplungsscheibe 28 gedrückt, die mit der mittleren Zahnriemenscheibe 20 verbunden ist. Die beiden Kupplungsscheiben weisen möglichst feinrastige Verzahnung, beispielsweise von 5° bis 7° auf, um möglichst variabel einkuppeln zu können. Die Achse 23 ist bis ungefähr zur Mitte der Haltescheibe 31 als Hohlachse ausgebildet und weist ein offenes Ende 24 auf. In der Figur 3 ist außerdem noch das rechte Trum 21 des Antriebsriemens 8, der als Zahnriemen ausgebildet ist und den Umfang der mittleren Zahnriemenscheibe 20 umgreift, sowie das linke Trum 15 ersichtlich.

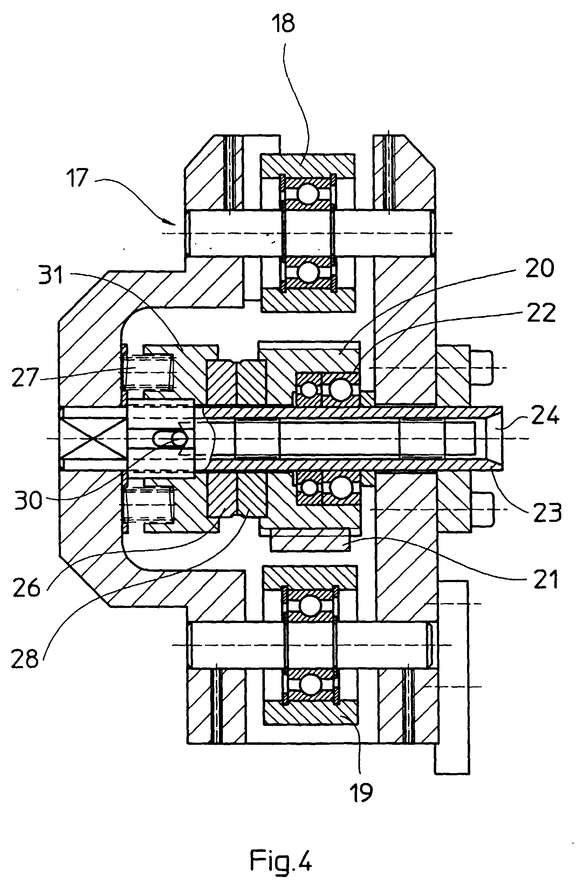

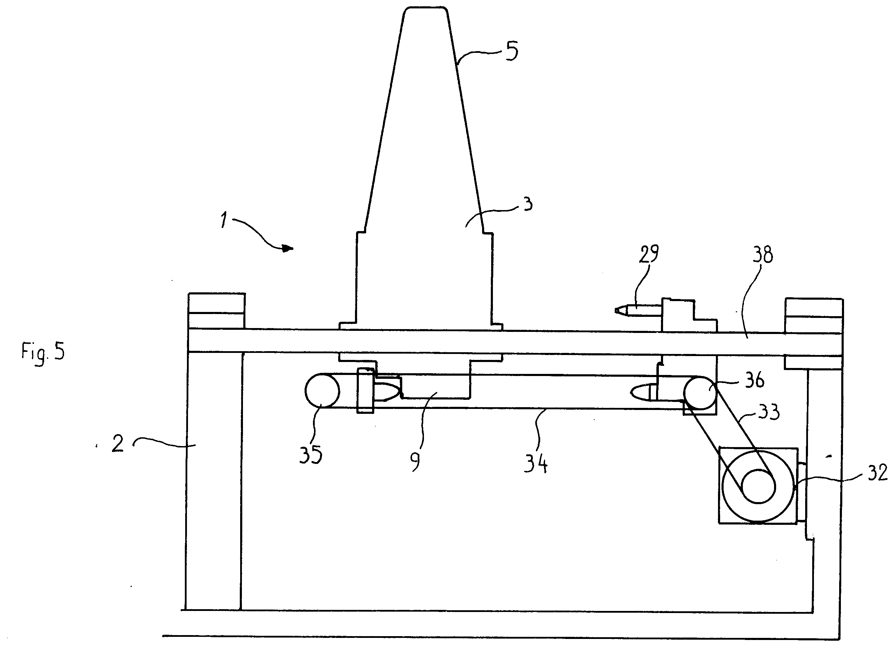

Anhand des Querschnitts durch die Dreirollenführung 17 in der Figur 4 wird nachfolgend das Lösen der mittleren Zahnriemenscheibe 20 von dem Antriebsriemen 8 erläutert. Hierzu wird in die Hohlachse 23 in das offene Ende 24 in axialer Richtung ein Ausdrückstift 29 (Figur 5) eingeführt, der bei seiner Bewegung entlang der Welle am anderen Ende den Zapfen 30, der mit der Haltescheibe 31 fest verbunden ist, gegen die Kraft der Federn 27 nach links drückt. Dabei lösen sich die beiden Kupplungsscheiben 26 und 28 voneinander, so daß in diesem Zustand die Rolle 20 genauso frei drehbar ist, wie die obere und untere Rolle 18 bzw. 19. Der untere Schweißstempel 16 wird durch den Ausdrückstift in seiner Position gehalten und bei einem Verfahren des Antriebsriemen 8 wird der Abstand zu dem oberen Schweißstempel 14 verändert. Sobald die Motorsteuerung erkennt, daß der richtige Abstand eingestellt ist, werden Ausdrückstift 29 und Hohlachse 23 wieder getrennt, so daß die beiden Kupplungsscheiben 26, 28 wieder ineinandergreifen und die Zahnriemenscheibe 20 drehfest mit dem unteren Schweißstempel 16 über die in axialer Richtung auf der Welle 23 bewegbaren Haltescheibe 31 verbunden ist.

Figur 5 zeigt den Tragrahmen 2, auf dem sich der Schlitten 9 zusammen mit der Schweißeinheit 3 entlang der Folientransportrichtung bewegen kann. Der Antrieb für die Bewegung parallel zu der Folienbahn erfolgt in bekannter Weise mittels eines weiteren Motors 32, der ebenfalls als intelligenter Servorantrieb ausgebildet ist, sowie den Antriebsriemen 33 und 34, wobei letzterer mit dem Schlitten 9 verbunden ist und über die Rollen 35 und 36 geführt wird. Die Figur zeigt den Ausdrückstift 29, der fest mit dem Tragrahmen 2 verbunden ist. Zum Verstellen der Schweißstempelhalter wird der Schlitten in eine sogenannte Ausdrückposition gefahren, in der der Ausdrückstift 29 in der vorstehend beschriebenen Art und Weise in die Welle 23 gelangt und den unteren Schweißstempel 16 von dem Antriebsriemen 8 löst.

Aus Figur 6, die eine Draufsicht auf die Querschweißeinrichtung 1 zeigt, sind die beiden Ausdrückstifte 29 für die beiden Dreirollenführungen 17 an den beiden Antriebsriemen 8 der Schweißstempelhalterungen 4, 5 ersichtlich. Die Kraftübertragung von dem Motor 10 erfolgt über den Antriebsriemen 11 und die Antriebsscheibe 41 an eine Drehmomentwelle 37. Der Schlitten 9 bewegt sich entlang der Schienen 38 und der Drehmomentwelle 37. Die Drehmomentwelle 37 ist in axialer Richtung drehbar über die Kugellager 39 an dem Tragrahmen 2 gelagert und wird über die Antriebsscheibe 41 in Drehung versetzt. Die Drehmomentwelle weist in axialer Richtung verlaufende Nuten bzw. Federn auf, die die mit dem Schlitten mitbewegte Antriebsscheibe 12, über die der Antriebsriemen 13 (Figur 1) läuft, antreibt.

## Patentansprüche

1. Querschweißeinrichtung für endlose Folienbahnen verwendende Verpackungsmaschinen mit einer einen ersten und einen zweiten Schweißstempel aufweisenden Schweißeinheit, wobei die Querverschweißung im kontinuierlichen Betrieb erfolgt und die Schweißstempel sowohl mittels eines ersten Motors senkrecht zur Bewegungsrichtung der Folienbahn als auch mittels eines weiteren Motors unabhängig davon parallel zur Bewegungsrichtung der Folienbahn bewegbar sind, **dadurch gekennzeichnet**, daß die Schweißeinheit (3) auf einem parallel zur Folienbahn bewegbaren Schlitten (9) angeordnet ist und zwei beidseitig der Folienbahn angeordnete Schweißstempelhalter (4, 5) aufweist, in denen jeweils über Umlenkrollen (6, 7), Antriebsriemen (8) angeordnet sind, die die Schweißstempel (14, 16) tragen und zur Durchführung der Querverschweißung die quer zur Folienbahn angeordneten Schweißstempel (14, 16) senkrecht zur Oberfläche der Folienbahn bewegen, und ein Schweißstempel (16), vorzugsweise der dem Schlitten (9) zugewandte, über jeweils eine Dreirollenführung (17) am jeweiligen Antriebsriemen (8) gehalten ist, die drei im wesentlichen auf einer Linie angeordnete Rollen (18, 19, 20) aufweist, wobei der Antriebsriemen (8) die mittlere Rolle (20) umschlingt und die beiden äußeren Rollen (18, 19) frei drehbar sind, während die mittlere Rolle (20) über Kupplungsscheiben (26, 28), die gegen eine Federkraft voneinander trennbar sind, drehfest mit dem Schweißstempel (16) verbunden ist.

2. Querschweißeinrichtung nach Anspruch 1, **dadurch gekennzeichnet**, daß die mittlere Rolle (20) der Dreirollenführung (17) auf einer wenigstens teilweise hohlen Achse (23) gelagert ist, in die an ihrem einen Ende (24) ein Ausdrückstift (29) einführbar ist.

3. Querschweißeinrichtung nach Anspruch 2, **dadurch gekennzeichnet**, daß die mittlere Rolle (20) auf ihrer dem offenen Ende (24) der Hohlachse (23) abgewandten Seite eine Kupplungsscheibe (28) aufweist, die an einer zweiten Kupplungsscheibe (26), die an einer drehfesten, gegen eine Federkraft axial auf der Welle (23) bewegbaren Haltescheibe (31) angebracht ist, haftet.

4. Querschweißeinrichtung nach Anspruch 3, **dadurch gekennzeichnet**, daß die Kupplungsscheiben (26, 28) als feinrastige Schaltkupplungen ausgebildet sind.

5. Querschweißeinrichtung nach einem der Ansprüche 2 bis 4, **dadurch gekennzeichnet**, daß die Ausdrückstifte (29) fest an einem Tragrahmen (2) befestigt sind und der Schlitten (9) zum Trennen der mittleren Rollen (20) von dem Schweißstempel (16) bis zu den Ausdrückstiften (29) verfahrbar ist.

6. Querschweißeinrichtung nach einem der vorangegangenen Ansprüche, **dadurch gekennzeichnet**, daß an einem Tragrahmen (2), gegenüber dem der Schlitten (9) parallel zur Folienbahn verfahrbar ist, eine in Folienlängsrichtung sich erstreckende und an dem Tragrahmen (2) axial drehbar gelagerte Drehmomentwelle (37) angeordnet ist, die über einen Servoantrieb (10) antreibbar ist und entlang der der Schlitten (9) bewegbar ist, und daß die Drehbewegung der Drehmomentwelle (37) mittels Kraftübertragungseinrichtungen auf die Antriebsriemen (8) der Schweißeinheit (3) übertragen wird.

7. Querschweißeinrichtung nach Anspruch 6, **dadurch gekennzeichnet**, daß zur Kraftübertragung zwischen der Drehmomentwelle (37) und der Schweißeinheit (3) auf dem Schlitten (9) mindestens eine das Drehmoment der Drehmomentwelle (37) aufnehmende Antriebsscheibe (12) und im Bereich der Schweißstempelhalter (4) zur Durchführung der Bewegung der Schweißstempel (14, 16) jeweils eine Schweißstempel-Antriebsscheibe (7) angeordnet sind, die über mindestens einen Antriebsriemen (13) miteinander verbunden sind.

8. Verfahren zum Einstellen und Bewegen von Schweißstempeln in einer Querschweißeinrichtung für endlose Folienbahnen verwendende Verpackungsmaschinen mit einer einen ersten und einen zweiten Schweißstempel aufweisenden Schweißeinheit, wobei die Querverschweißung im kontinuierlichen Betrieb erfolgt und die Schweißstempel sowohl mittels eines ersten Motors senkrecht zur Bewegungsrichtung der Folienbahn als auch mittels eines weiteren Motors unabhängig davon parallel zur Bewegungsrichtung der Folienbahn bewegt werden, **dadurch gekennzeichnet**, daß die Schweißstempel (14, 16) senkrecht zur Oberfläche der Folienbahn zur Durchführung des Schweißvorgangs mittels an beiden Enden der Schweißstempel angeordneter Antriebsriemen (8), an denen die Schweißstempel befestigt sind, bewegt werden und zur Verstellung des Abstandes der Schweißstempel zueinander ein Schweißstempel (16) automatisch von dem Antriebsriemen (8) gelöst, anschließend die relative Lage zwischen Schweißstempel und dem Antriebsriemen entsprechend dem gewünschten Abstand zwischen dem festen Schweißstempel und dem gelösten Schweißstempel verändert und darauffolgend der gelöste Schweißstempel automatisch an dem Antriebsriemen wieder fixiert wird.

9. Verfahren nach Anspruch 8, **dadurch gekennzeichnet**, daß der gelöste Schweißstempel (16) in seiner Position gehalten und der Antriebsriemen (8) mit dem festen Schweißstempel (14) bis zu dem gewünschten Abstand verfahren wird.

10. Verfahren nach Anspruch 8 oder 9, **dadurch gekennzeichnet**, daß der zu lösende Schweißstempel über eine Dreirollenführung (17) mit drei im wesentlichen auf einer Linie angeordneten Rollen (18, 19, 20) am Antriebsriemen (8) gehalten wird, indem der Antriebsriemen über die beiden äußeren beweglichen Rollen laufend schlangenlinienförmig um die mittlere fest mit dem Schweißstempel verbundene Rolle geführt wird, und zum Lösen des Schweißstempels von dem Antriebsriemen jeweils die Verbindung der mittleren Rolle von dem Schweißstempel gelöst wird.

11. Verfahren nach einem der Ansprüche 8 bis 10, **dadurch gekennzeichnet**, daß zum Lösen des Schweißstempels (16) die Schweißeinheit (3) in eine Ausklinkposition verfahren wird.

12. Verfahren nach Anspruch 11, **dadurch gekennzeichnet**, daß mit Erreichen der Ausklinkposition der Schweißstempel (16) von dem Antriebsriemen (8) gelöst und in seiner augenblicklichen Position gehalten und beim Wegfahren wieder an dem Antriebsriemen fixiert wird.
